# EUROPÄISCHE PATENTSCHRIFT

(11) **EP 2 570 201 B1**
(45) Veröffentlichungstag und Bekanntmachung des Hinweises auf die Patenterteilung: **26.03.2014**
(21) Anmeldenummer: 11181198.0
(22) Anmeldetag: 14.09.2011
(51) Int. Cl.: B09C 1/02

(54) **System und Verfahren zur geschlossenen Wasserkreislaufführung**
System and method for conveying water in a closed circuit
Système et procédé de circulation d'eau en circuit fermé

(43) Veröffentlichungstag der Anmeldung: 20.03.2013
(73) Patentinhaber: Luxin (Green Planet) AG, 6004 Luzern (CH)
(72) Erfinder: Glanzmann, Arthur, 6004 Luzern (CH)
(74) Vertreter: Rupp, Christian

(56) Entgegenhaltungen:
- EP-A1- 2 058 441
- EP-A2- 1 787 734
- WO-A1-96/00624
- US-A- 5 622 864

## Beschreibung

Die Erfindung betrifft ein System sowie ein Verfahren zur geschlossenen Wasserkreislaufführung.

Beispielsweise bei der Amalgammethode zum Auswaschen von Gold wird reines Quecksilber eingesetzt, welches die Goldpartikel umschließt und als Amalgamklumpen zurückbleibt. Ein Teil des Quecksilbers bleibt dabei an dem auszuwaschenden Material, beispielsweise Flusssedimente, haften und gelangt dann, in der Regel ohne zusätzliche Behandlung, mit dem übrigen Bodenmaterial zurück in die Umwelt.

Ein weiteres Beispiel ist Rotschlamm, welcher ein Abfallprodukt der Aluminiumherstellung ist. Der Rotschlamm fällt als Rest bei der Extraktion von Aluminium in der Aluminiumherstellung an und ist stark alkalisch. Noch heute gibt es Regionen, wo der Rotschlamm ohne besondere Vorkehrungen deponiert oder in die Umwelt geleitet wird. In der Regel wird der Schlamm jedoch in Deponien gelagert. Die als Dispersion vorliegenden Hydroxide und Silikate setzten sich sodann ab und die austretende Natronlauge wird wiederverwertet. Dieser Prozess ist sehr zeitintensiv.

Ein Verfahren zur Behandlung von kontaminierter Erde ist in WO 96/00 624 offenbart.

Es ist nunmehr eine Aufgabe der Erfindung, ein System und ein Verfahren zur geschlossenen Wasserkreislaufführung bereitzustellen, bspw. zum Behandeln eines Materials mit dem Wasser, mit dem ein umweltschonender, effektiver und effizienter Einsatz ermöglicht wird.

Diese Aufgabe wird durch die unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird ein System zur geschlossenen Wasserkreislaufführung nach Anspruch 1 bereitgestellt, welches aufweist: wenigstens ein wasserundurchlässiges und nach außen abgegrenztes Reservoir zum Auffangen von Wasser, wobei in dem Reservoir ein Material vorgesehen und/oder angeordnet ist, welches mit dem Wasser zu behandeln ist, wenigstens ein Auffangbehälter, welcher im Reservoir im Wesentlichen in der oder in Nähe der Sohle des Reservoirs angeordnet ist, wobei der Auffangbehälter wenigstens eine Öffnung aufweist, durch die das Wasser fließen kann, wenigstens eine Wasserentnahmevorrichtung zur Entnahme des in dem Auffangbehälter gesammelten Wassers aus dem Reservoir, wenigstens eine Aufbereitungsvorrichtung, die ausgebildet ist, das dem Reservoir entnommene Wasser zur Wiederverwendung in dem System aufzubereiten, und wenigstens eine Rückführvorrichtung, die ausgebildet ist, das aufbereitete Wasser in das Reservoir zurückzuführen.

Mittels des erfindungsgemäßen Systems kann es auf einfache Weise verhindert werden, dass die zur Behandlung des Materials in dem Wasser mitgeführten oder bei der Behandlung des Materials mit dem Wasser abgeführten Stoffe oder Materialien (bspw. mitgeführte Chemikalien oder abgeführtes Quecksilber) in die das System umgebende Umwelt gelangen, insbesondere nicht in das Grundwasser. So kann beispielsweise ein mit Quecksilber verunreinigtes Sediment von der Aluminiumherstellung auf einfache Weise von dem Quecksilber befreit werden, ohne dass das Grundwasser unnötig belastet wird. Zudem kann auch das Abführen von Natronlauge in Rotschlamm über den geschlossenen Wasserkreislauf auf einfache Weise ermöglicht werden. Als besonders vorteilhaft hat sich erwiesen, dass dieses System für alle Arten von insbesondere wasserverbrauchenden Anlagen, wie beispielsweise industrielle, agrarische, agrarindustrielle, landschaftsbauliche, etc. Anlagen und Anwendungen sowohl im Innenbereich als auch im Außenbereich eingesetzt werden kann. Das wasserundurchlässige und nach außen abgegrenzte Reservoir verhindert dabei, dass belastende Stoffe (beispielsweise Chemikalien und dergleichen) nicht ins Grundwasser gelangen können.

Ein System sowie Anlagen aufweisend das System und Anwendungen des Systems ermöglichen somit eine autarke Wasserversorgung, während gleichzeitig der Austritt des Wassers aus dem System mit möglichen Folgeschäden für die Umwelt vermieden wird, wodurch wiederum ein Verlust von Wasser aus dem System verhindert oder wenigstens minimiert wird, während gleichzeitig das in dem System befindliche Wasser oder Material zu jedweder Nutzung wieder aufbereitet wird und zudem das Wasser und der Wasserhaushalt im System bewirtschaftet werden kann.

Das in dem Reservoir vorgesehene und/oder angeordnete Material kann beispielsweise ein das Reservoir wenigstens teilweise auffüllendes Schüttgut (beispielsweise mit Quecksilber verunreinigtes Sediment oder Rotschlamm) oder ein die Innenwand des Reservoirs wenigstens teilweise bedeckendes Material (beispielsweise Salz in einem Salzstock) sein. Das System ist somit besonderes vielfältig einsetzbar.

Der Auffangbehälter erstreckt sich vorzugsweise in dem Reservoir von dessen Boden nach oben mindestens bis oberhalb des Materials in dem Reservoir, wobei der Auffangbehälter oberhalb des Materials eine zweite Öffnung aufweist, durch die das Wasser einfach entnommen werden kann. Der Auffangbehälter ist vorzugsweise ein Brunnen oder ein spanischer Reiter, so dass eine Entnahme des Wassers aus dem Reservoir besonders einfach möglich ist.

Die Entnahme des Wassers aus dem Auffangbehälter kann dadurch vereinfacht werden, in dem die Wasserentnahmevorrichtung vorzugsweise wenigstens eine Pumpvorrichtung ist. Die Pumpvorrichtung der Wasserentnahmevorrichtung kann dabei entweder in dem Auffangbehälter angeordnet sein und sich über eine Leitung aus dem Reservoir zu der Aufbereitungsvorrichtung hin erstrecken, oder die Pumpvorrichtung ist außerhalb des Reservoirs angeordnet und über eine Leitung mit dem Auffangbehälter strömungstechnisch verbunden. Somit kann ein vorzugsweise automatisches Abpumpen des verunreinigten Wassers aus dem Auffangbehälter und zu der Aufbereitungsvorrichtung hin ermöglicht werden.

In einer besonders bevorzugten Ausführungsform ist das Reservoir ein Auffangbecken oder umfasst künstliche oder natürliche Höhlen, wie beispielsweise Minen und Bergwerke, was den Einsatz des Systems weiter steigert. Das Reservoir ist dabei vorzugsweise wannen-, halbkugel- oder höhlenförmig ausgebildet.

Des Weiteren umfasst das Reservoir wenigstens ein Geotexteil. Das Reservoir wird somit auf einfache und robuste Weise wasserundurchlässig und nach außen abgegrenzt bereitgestellt.

Das in dem System eingesetzte Wasser ist vorzugsweise mit Stoffen oder Materialen versetzt, welche der Behandlung des Materials in dem Reservoir dienen und die dem Wasser in der Aufbereitungsvorrichtung zuführbar sind. Somit kann durch Konstanthalten oder wahlweises Anpassen der Konzentration des Stoffes oder Materials in dem Wasser innerhalb des geschlossenen Wasserkreislaufs zu jeder zeit eine gleichbleibende bzw. gewünschte Behandlung des Materials in dem Reservoir gewährleistet werden.

Ferner ist es denkbar, dass die Aufbereitungsvorrichtung wenigstens eine Reinigungsvorrichtung aufweist, die derart ausgebildet ist, das in dem Reservoir verunreinigte Wasser zu reinigen. Vorzugsweise sind die Verunreinigungen über wenigstens eine Abführleitung aus dem System entnehmbar, beispielsweise zur Wiederverwertung. Im Gegensatz zum Zusetzen von Stoffen oder Materialien in das Wasser umfasst die Aufbereitung hier nunmehr ein Auswaschen bzw. Entfernen eines Stoffes oder Materials, welches mittels des Wassers aus dem in dem Reservoir befindlichen Material mitgeführt wurde. Dieses kann dann dem Wasser wiederum in der Aufbereitungsvorrichtung entzogen werden (beispielsweise durch Filtern oder sonstige Reinigungssysteme), so dass das Material beispielsweise zur Wiederverwendung bereitgestellt werden kann, während das Wasser selbst in dem geschlossenen System gereinigt und/oder mit zur Behandlung versetzten Stoffen angereichert werden kann, um im System wiederverwendet zu werden.

Das System kann ferner wenigstens eine Zuführleitung aufweisen, über die Beispielsweise Wasser oder dem Wasser zuzusetzende Stoffe oder Materialien von außen zugeführt werden können. Es ist auf diese Weise möglich, den Wassergehalt innerhalb des geschlossenen Systems aufrechtzuerhalten, wenn beispielsweise Wasser durch Verdunstung verloren geht. Ferner kann durch das Zuführen von dem Wasser zuzusetzenden Stoffen die Behandlungswirkung des mit diesem Stoff versetzten Wassers konstant aufrechterhalten bleiben oder in gewünschter Weise eingestellt werden.

Nach einer besonders bevorzugten Ausführungsform ist das System mit natürlichen und/oder künstlich angelegten Flächen und/oder Grünflächen funktional verbunden. Auf diese Weise ist es möglich, das System in einem Umfeld zu integrieren, in dem künstlich geschaffene oder natürliche Begebenheiten, beispielsweise eines Golfplatzes oder einer Parkanlage eines Hotels, als notwendige "Kläranlage" des Systems dienen können. Das System kann somit an jeden denkbaren wasserverbrauchenden Komplex als eigenes autonomes Wasserwirtschafts- und Wasserreinigungssystem unter funktionaler Einbeziehung der externen natürlichen oder künstlichen Flächen vorgesehen werden.

Vorzugsweise können die zum System gehörenden Flächen oder Gebiete wassertechnisch von ihrem natürlichen Umfeld hermetisch separiert werden, so dass sie autark bewirtschaftet werden können.

Ein Ausführungsbeispiel der Erfindung umfasst ferner eine Anlage für industrielle, agrarische, agrarindustrielle oder landschaftsbauliche Maßnahmen, aufweisend ein System gemäß der Erfindung. Ferner offenbart die Erfindung ein Verfahren zur geschlossenen Wasserkreislaufführung nach Anspruch 13.

Die Erfindung wird nun anhand von Ausführungsbeispielen beschrieben, die in den Figuren der begleitenden Zeichnungen dargestellt sind.
- Figur 1: zeigt ein System zur geschlossenen Wasserkreislaufführung gemäß einem ersten Ausführungsbeispiel, und
- Figur 2: zeigt ein System zur geschlossenen Wasserkreislaufführung gemäß einem zweiten Ausführungsbeispiel.

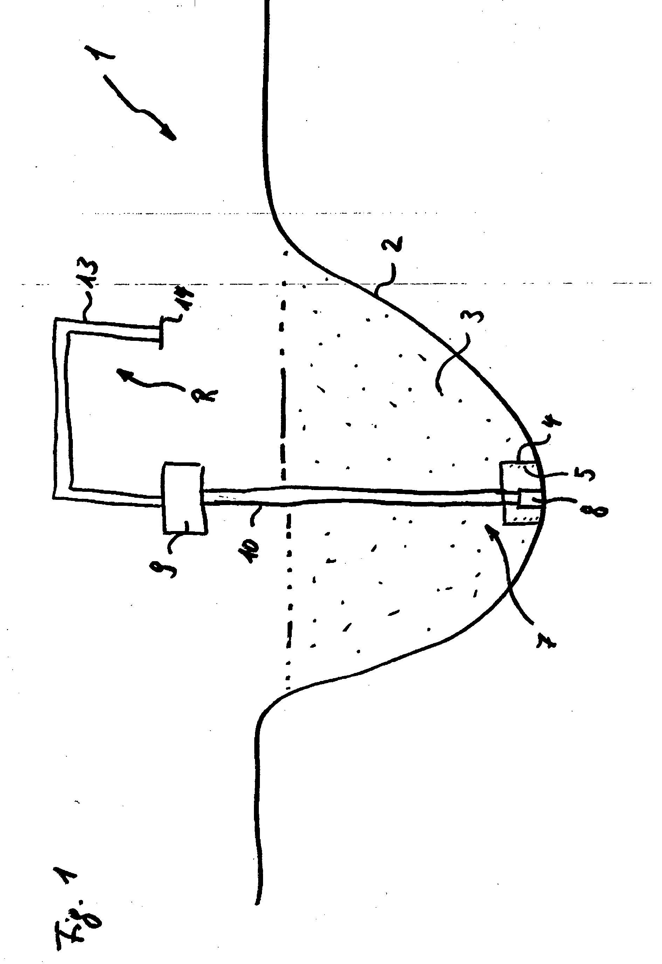

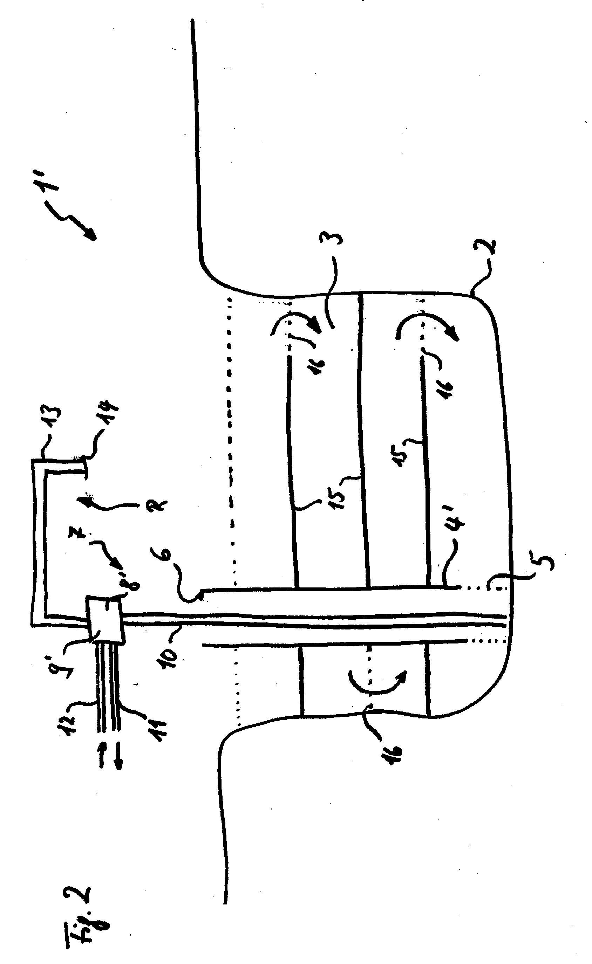

Figuren 1 und 2 zeigen jeweils unterschiedliche Ausführungsformen eines erfindungsgemäßen Systems 1, 1' zur geschlossenen Wasserkreislaufführung, wobei alle im Folgenden beschriebenen Merkmale und Ausgestaltungsformen der beiden Systeme 1, 1' beliebig miteinander kombiniert werden können. Gleiche Merkmale sind mit denselben Bezugszeichen versehen.

Das System 1, 1' weist ein im Wesentlichen wasserundurchlässiges und nach außen abgegrenztes Reservoir 2 auf. Auch wenn in den Figuren der begleitenden Zeichnungen jeweils nur ein Reservoir 2 gezeigt ist, so kann das Reservoir 2 auch aus mehreren Reservoirs bestehen, die ganz oder teilweise funktional miteinander verbunden oder voneinander getrennt sein können.

Das Reservoir 2 kann wenigstens ein künstliches oder natürliches Auffangbecken oder wenigstens eine künstliche oder natürliche Höhle, wie beispielsweise von Minen oder Bergwerken, aufweisen. Das Reservoir 2 ist aber grundsätzlich nicht an eine bestimmte Form beschränkt; vielmehr kann das Reservoir 2 jede denkbare Form aufweisen, insbesondere ein Wannen-, Halbkugel- oder Höhlenform. Mit anderen Worten kann das Reservoir 2 jede geeignete Form und/oder Größe aufweisen.

Mittels eines derartigen Reservoirs 2 wird es ermöglicht, dass möglichst kein Wasser aus dem erfindungsgemäßen System 1, 1' in die Umgebung gelangt, insbesondere nicht in tiefere, poröse, wasseranziehende oder wasserleitende Schichten und ins Grundwasser. Somit kann eine Verunreinigung der Umwelt und insbesondere des Grundwassers durch in dem System 1, 1' befindliche (giftige bzw. umweltschädliche) Stoffe oder Materialien vermieden werden.

Das Reservoir 2 hat ferner den Vorteil, dass das erfindungsgemäße System 1, 1' ortsunabhängig, also unabhängig von der geologischen Beschaffenheit, den Klimaverhältnissen und/oder den Bodenverhältnissen vor Ort eingesetzt werden kann. So kann das System 1, 1' beispielsweise für und/oder in allen denkbaren industriellen, agrarischen, agrarindustriellen, landschaftsbaulichen und dergleichen Anlagen und Anwendungen verwendet werden. Ebenso kann das System 1, 1' sowohl im Innen- als auch im Außenbereich beliebig eingesetzt werden.

In dem Reservoir 2 ist ein Material 3 vorgesehen und/oder angeordnet. Dieses Material 3 kann beispielsweise ein das Reservoir 2 wenigstens teilweise auffüllendes Schüttgut, wie beispielsweise ein bei der Goldgewinnung anfallendes, mit Quecksilber verunreinigtes Sediment oder Rotschlamm, oder ein die Innenwand des Reservoirs 2 wenigstens teilweise bedeckendes Material, wie beispielsweis Salz in einem Salzstock, sein. Die Erfindung ist selbstverständlich nicht auf die vorbeschriebenen Materialien beschränkt; vielmehr kann jedes beliebige Material 3 oder auch verschiedene Materialien 3 in dem Reservoir 2 oder an dessen Innenwand oder in sonstiger Weise (auch Kombinationen des Vorgenannten) vorgesehen sein, in der Art, dass es mittels eines geschlossenen Wasserkreislaufs behandelt werden kann.

Zur Behandlung des Materials 3 wird erfindungsgemäß vorzugsweise Wasser verwendet. Allerdings ist die Erfindung nicht auf Wasser als behandelndes Medium begrenzt. So kann der im Rahmen der Anmeldung verwendete Begriff "Wasser" jedes denkbare, vorzugsweise flüssige Behandlungs- bzw. Reinigungsmedium umfassen.

Das erfindungsgemäße System 1, 1' weist ferner wenigstens einen Auffangbehälter 4 auf, welcher im Reservoir im Wesentlichen in der oder in Nähe der Sohle des Reservoirs 2 angeordnet ist. Der Auffangbehälter 4 weist ferner, vorzugsweise in unmittelbarer Nähe des Bodens bzw. der Sohle des Reservoirs 2, wenigstens eine oder mehrere Öffnungen 5 auf, durch die das Wasser in den Auffangbehälter 4 fließen kann; also insbesondere Wasser, welches zur Behandlung des Materials 3 in das System 1, 1', genauer in das Reservoir 2 geleitet wurde. Unter "in der Nähe" wird im Rahmen der Erfindung verstanden, dass sowohl Auffangbehälter 4 als auch dessen Öffnungen 5 derart in dem Reservoir 2 angeordnet sind, dass das durch das Material 3 durchsickernde oder durchgesickerte Wasser sicher und im Wesentlichen vollständig in dem Auffangbehälter 4 gesammelt werden kann.

Vorzugsweise handelt es sich bei der Öffnung 5 um ein Loch oder um einen Schlitz. Die Öffnung 5 kann jedoch auch jede andere geeignete Form und Größe aufweisen, wobei die Form und Größe bei Vorliegen mehrerer Öffnungen 5 gleich sein kann oder sich voneinander unterscheidet. Besonders vorzugsweise kann die Größe der Öffnung 5 wahlweise variiert werden, vorzugsweise stufenlos zwischen einem vollständig geschlossenen und einem vollständig geöffneten Zustand. Durch die Wahl der Anzahl, Größe und Geometrie der Öffnungen 5 kann die Geschwindigkeit, mit der das Wasser in den Wasserauffangbehälter 4 sickert, variiert werden. Bei der Wahl der Größe und Geometrie der Öffnungen 5 ist darauf zu achten, dass möglichst kein Material 3 in den Wasserauffangbehälter 4 gelangt.

Wie in Figur 1 gezeigt, kann der Auffangbehälter 4 sich lediglich auf dem Boden oder in Bodennähe des Reservoirs 2 erstrecken bzw. angeordnet sein. Es ist jedoch auch möglich, dass der Auffangbehälter 4' sich in dem Reservoir 2 von dessen Boden nach oben erstreckt, vorzugsweise wenigstens bis oberhalb des Materials 3 in dem Reservoir 2 (siehe Figur 2). In diesem Fall weist der Auffangbehälter 4' oberhalb des Materials 3 eine weitere, vorzugsweise verschließbare Öffnung 6 auf, durch die das Wasser in dem Auffangbehälter 4 einfach zugänglich ist und aus dem Reservoir 2 entnommen werden kann. Der Auffangbehälter 4 kann beispielsweise als Brunnen oder auch als spanischer Reiter oder in sonstiger Weise ausgebildet sein. Auch unterschiedliche Ausgestaltungsformen mehrerer Auffangbehälter 4, 4' in einem Reservoir 2 bzw. System 1, 1' ist denkbar.

Das System 1, 1' weist ferner wenigstens eine Wasserentnahmevorrichtung 7 auf, mit der das in dem Auffangbehälter 4, 4' gesammelte Waser aus dem Reservoir 2 entnommen werden kann. Die Wasserentnahmevorrichtung 7 weist vorzugsweise wenigstens ein Pumpvorrichtung 8, 8' auf. Die Pumpvorrichtung 8, 8' kann, wie in Figur 1 gezeigt, beispielsweise in dem Auffangbehälter 4 angeordnet sein. Alternativ oder zusätzlich kann die Pumpvorrichtung 8' auch außerhalb des Reservoirs 2 vorgesehen sein, vorzugsweise oberhalb der Oberfläche des in dem Reservoir 2 befindlichen Materials 3 (siehe Figur 2).

Durch das Abpumpen von Wasser aus dem Auffangbehälter 4 kann die Fließgeschwindigkeit des Wassers durch das gesamte erfindungsgemäße System 1, 1', insbesondere durch das Material 3, variiert werden. So lässt sich auch die Verweilzeit des durch das Material 3 durchsickernden bzw. durchgeleiteten Wassers innerhalb des erfindungsgemäßen Systems 1, 1' variieren, was sich wiederum auf die Qualität der Wasserbehandlung auswirkt. Je nach zu behandelnden Materials 3 kann eine höhere oder eine niedrigere Fließgeschwindigkeit und/oder Verweildauer des Wassers in dem Material 3 von Vorteil sein.

Das System 1, 1' weist ferner wenigstens eine Aufbereitungsvorrichtung 9, 9' auf, die fließtechnisch dem Auffangbehälter 4 nachgeschaltet ist, also stromab des Auffangbehälters 4. Die Aufbereitungsvorrichtung 9, 9' ist dabei vorzugsweise außerhalb des Reservoirs 2, insbesondere oberhalb des Materials 3 angeordnet.

Die Aufbereitungsvorrichtung 9, 9' ist vorzugsweise mittels einer oder mehrerer Leitungen 10 der Wasserentnahmevorrichtung 7 mit dem Auffangbehälter 4, 4' verbunden und diese erstreckt bzw. erstrecken sich vorzugsweise in den Auffangbehälter 4, 4' hinein. Besonders vorzugsweise erstreckt sich die Leitung 10 bis zum Boden oder bis zur Nähe des Bodens des Auffangbehälters 4, 4', um auch geringe, sich im Auffangbehälter 4, 4' angesammelte Wassermengen zu erreichen.

Wie in Figur 1 gezeigt, kann sich die Leitung 10 folglich von der in dem Auffanggehälter 4 befindlichen Pumpvorrichtung 5, durch das Material 3 und aus dem Reservoir 2 heraus bis zur Aufbereitungsvorrichtung 9 erstrecken.

Wie in Figur 2 gezeigt, kann sich die Leitung 10 auch von im Wesentlichen dem Boden des Auffangbehälters 4', also des Reservoirs 2, aus durch den als Brunnen ausgebildeten Auffangbehälter 4' nach oben aus dem Reservoir 2 hinaus bis zur Aufbereitungsvorrichtung 9' erstrecken. In Figur 2 ist die Pumpvorrichtung 8' als eine Einheit mit der Aufbereitungsvorrichtung 9' dargestellt.

Es ist allgemein jedoch denkbar, dass die Pumpvorrichtung 8, 8' auch separat von dem Auffangbehälter 4, 4' und/oder der Aufbereitungsvorrichtung 9, 9' vorgesehen ist. Insbesondere muss sie derart vorgesehen sein, dass die Pumpvorrichtung 8, 8' ein Abpumpen des Wassers aus dem Auffangbehälter 4, 4' und zur Aufbereitungsvorrichtung 9, 9' hin ermöglicht. Dabei kann sie in dem oder außerhalb des Reservoirs 2, genauer in dem oder außerhalb des Auffangbehälters 4, 4', und/oder stromab oder stromauf der Aufbereitungsvorrichtung 9, 9' oder mit dieser zusammen angeordnet bzw. ausgebildet sein.

Die Aufbereitungsvorrichtung 9, 9' ist derart ausgebildet, dass sie das dem Reservoir 2 entnommene Wasser zur Wiederverwendung insbesondere in dem System 1, 1' selbst aufbereiten kann. Dafür kann die Aufbereitungsvorrichtung 9, 9' beispielsweise Filtersysteme oder chemische Aufbereitungssysteme oder sonstige, zur Aufbereitung von Wasser geeigneten Systeme aufweisen.

Die Aufbereitungsvorrichtung 9, 9' kann ferner als Abscheider oder dergleichen ausgebildet sein, um beispielsweise mit dem Wasser mitgeführte Stoffe oder Materialien aus dem Wasser abzuscheiden.

Die Aufbereitungsvorrichtung 9, 9' kann also als Reinigungsvorrichtung ausgebildet sein, mit der das in dem Reservoir 2 verunreinigte Wasser gereinigt werden kann. Etwaige anfallende Verunreinigungen, die nach dem Reinigungsprozess mittels der Aufbereitungsvorrichtung 9, 9' abgetrennt wurden, können beispielsweise über wenigstens eine Leitung 11 (siehe Figur 2) von bzw. aus dem System 1, 1' entnommen und zur Wiederverwertung außerhalb oder innerhalb des Systems 1, 1' bereitgestellt werden.

Zusätzlich oder alternativ ist es ferner denkbar, dass in der Aufbereitungsvorrichtung 9, 9' dem Wasser Stoffe oder Materialien zugesetzt werden bzw. das Wasser mit diesen Stoffen oder Materialien versetzt wird, welche der Behandlung des Materials 3 in dem Reservoir 2 dienen. Hierzu kann das System 1, 1' vorzugsweise ferner mit wenigsten s einer Zuführleitung 12 ausgestattet sein, die beispielsweise in die Aufbereitungsvorrichtung 9, 9' oder eine Leitung des geschlossenen Wasserkreislaufsystems oder in das Reservoir 2 hineinführt.

Zusätzlich oder alternativ ist es denkbar, dass die Zuführleitung zum Zuführen von Wasser in das System 1, 1' dient, um beispielsweise durch Verdunstung verloren gegangenes Wasser dem System 1, 1' zuzuführen. Auf diese Weise kann ein konstanter Wassergehalt in dem System 1, 1' gewährleistet werden. Auch wenn in der Figur 2 lediglich eine Zuführleitung 12 und eine Abführleitung 11 dargestellt sind, so können auch mehrere Zuführ- und/oder Abführleitungen vorgesehen sein. Wie bereits erläutert, kann auch das in Figur 1 gezeigte System 1 etwaige Zuführleitungen 12 und Abführleitungen 11 aufweisen.

Die in der Aufbereitungsvorrichtung 9, 9' herausgefilterten oder abgesonderten Verunreinigungen können wenigstens zum Teil auch in dem zu behandelnden Material 3 befindliche Chemikalien oder andere Stoffe oder Materialien sein, beispielsweise Quecksilber, welches beim Abbau von Gold in dem Sediment (= Material 3) zurückgeblieben ist. Es ist somit mittels des Systems 1, 1' möglich, diese Stoffe und Materialien aus dem Material 3 herauszuwaschen bzw. herauszulösen, dem System 1, 1' oder wenigstens dem Wasserkreislauf zu entnehmen und somit diese Stoffe für weitere Anwendungen (hier bspw. zum erneuten Auswaschen von Gold) zur Verfügung zu stellen.

Beispielsweise kann zudem der dem Wasser zur Behandlung zugesetzte Stoff oder die Materialien aus den beispielsweise über die Abführleitung 11 abgeführten Verunreinigungen wiedergewonnen und dem System 1, 1', beispielsweise über die Zuführleitung 12, wieder zur Verfügung gestellt werden. Dieser Vorgang kann auch direkt innerhalb der Aufbereitungsvorrichtung 9, 9' bzw. des Systems 1, 1' ablaufen, so dass lediglich eventuell weitere angefallene Verunreinigungen aus dem System 1, 1' abgeführt werden müssen.

Das System 1, 1' weist ferner eine Rückführvorrichtung R auf, die eine Rückführung des aufbereiteten Wassers in das Reservoir 2 ermöglicht. Diese Rückführvorrichtung R kann beispielsweise lediglich wenigstens eine Rückführleitung 13 aufweisen. Neben der Rückführleitung 13 kann nach der Aufbereitung und vor der Zuführung des Wassers in das Reservoir 2 das Wasser jedoch noch weitere Schritte in der Rückführvorrichtung R zur Aufbereitung und/oder Behandlung oder dergleichen in einer verwendeten Anlage durchlaufen, wobei ein geschlossener Wasserkreislauf aufrechterhalten bleibt. Um ein Zurückführen des Wassers zu ermöglichen, weist die Rückführvorrichtung 13 vorzugsweise eine nicht dargestellte Pumpvorrichtung auf; alternativ oder zusätzlich kann hierfür auch die bereits zuvor beschrieben Pumpvorrichtung 8, 8' dienen, die das Durchleiten des Wassers durch das gesamte System ermöglicht.

In den Figuren weist die Rückführleitung 13 an ihrem der Aufbereitungsvorrichtung 9, 9' abgewandten Ende vorzugsweise eine Düse und/oder ein Ventil 14 auf. Mittels einer Düse kann beispielsweise das austretende Wasser gezielt in das Reservoir 2 bzw. auf das Material 3 aufgebracht bzw. verteilt werden; beispielsweise duschkopfartig. Mittels eines zusätzlich oder alternativ vorgesehenen Ventils kann des Weiteren die Zuflussmenge des Wassers in das Reservoir 2 wahlweise und vorzugsweise stufenlos geregelt werden.

Es ist ferner denkbar, dass das System 1, 1' eine Steuervorrichtung (nicht gezeigt) aufweist, mit der das System 1, 1' voll- oder teilautomatisch betrieben werden kann. So ist es beispielsweise möglich, dass im Zusammenspiel mit beliebig vorgesehenen Sensoren automatisch über die Zuführleitung Wasser und/oder mit dem Wasser zu versetzende Stoffe oder Materialien zugeführt, über die Abführleitung 11 Verunreinigungen aus dem System 1, 1' abgeleitet, eine Ventilöffnung oder Düseneinstellung am Ende der Rückführleitung 13 eingestellt, sowie die Abpumpleistung der Wasserentnahmevorrichtung 7 wahlweise eingestellt werden kann. Diese Einstellungen können beispielsweise auf Messergebnissen des Verunreinigungsgrades des Wassers oder dergleichen beruhen.

Um die Behandlung des Materials 3 mit dem beispielsweise mit einem Stoff oder Material versetzten Wasser homogen zu gestalten und die Behandlungsqualität zu steigern, umfasst das System 1, 1' ferner eine oder mehrere Barriereschichten 15, welche innerhalb des Reservoirs 2 angeordnet ist bzw. sind. Die Barriereschicht 15 ist zudem mit mindestens einem Durchlass 16 für Wasser versehen. Abgesehen von dem Durchlass 16, der wasserdurchlässig ist, ist die Barriereschicht 15 aus einem Material gefertigt, welches im Wesentlichen wasserundurchlässig ist. Unter "im Wesentlichen wasserundurchlässig" wird im Rahmen der vorliegenden Erfindung verstanden, dass die Barriereschicht 15 derart ausgebildet ist, dass der Hauptteil des Wassers, welcher durch das Reservoir 2, also das Material 3 sickert, daran gehindert wird, durch die Barriereschicht 15 hindurch in den Bereich oberhalb bzw. unterhalb der Barriereschicht 15 zu gelangen. Die Barriereschicht 15 dient zur Verlängerung des Sickerweges des Wassers durch das Material 3 in dem Reservoirs 2. Durch die Verlängerung des Sickerwegs bleibt das Wasser länger in dem Material 3 und verteilt sich besser über dessen gesamtes Volumen, sodass die Behandlungsqualität deutlich gesteigert werden kann.

Die die Barriereschicht 15 durchstoßenden Leitungen 10 oder Auffangbehälter 4, 4' können derart angeordnet sein, dass sie mit der Barriereschicht 15 in abdichtender, also insbesondere wasserundurchlässiger Weise mit einander verbunden sind. Die Verbindung kann jedoch auch wasserdurchlässig sein, so dass ein kleiner Teil des Wassers (also maximal so viel, dass ein mäanderförmiger Durchfluss des restlichen Wassers entlang des durch die Barriereschicht 15 vorgegebenen Pfades zu einer ausreichenden Behandlung ermöglicht ist) wenigstens teilweise entlang der Leitungen 10 oder Auffangbehälter 4, 4' fließen kann, wodurch das von Wasser durchdrungene Volumen des Materials 3 noch vergrößert werden kann.

Vorzugsweise sind die Barriereschichten 15 im Wesentlichen horizontal angeordnet, da bei dieser Anordnung der Sickerweg des Wassers durch das System 1, 1' am längsten ist, was sich besonders positiv auf die Behandlungsqualität auswirkt. Es ist jedoch auch jede andere Neigung der Barriereschichten 15 möglich, wenn die Eigenschaft der Barriereschicht 15, den Sickerweg des Wassers zu verlängern, beibehalten wird. Die einzelnen Barriereschichten 15 innerhalb des Systems 1, 1' können jeweils den gleichen Neigungsgrad aufweisen, sich aber auch hinsichtlich ihres Neigungsgrads untereinander beliebig unterscheiden.

Der Durchlass 16 für Wasser nimmt, relativ zur gesamten Fläche der Barriereschicht 15, nur einen kleinen Flächenbereich ein. Vorzugsweise handelt es sich hierbei um einen Flächenbereich von 5 bis 20 % bezogen auf die Gesamtfläche der Barriereschicht 15.

Vorzugsweise ist der Durchlass 16 für Wasser an einer ausgewählten Stelle angeordnet. Beispielsweise kann der Durchlass 16 im äußeren Bereich der Barriereschicht 15, also nahe einem Randbereich des Reservoirs 2, angeordnet sein, wie dies auch in Figur 2 dargestellt ist. Der Durchlass 16 für Wasser befindet sich bevorzugt unmittelbar vor dem Ende oder direkt am Ende der Barriereschicht 15, also an oder nahe einem Bereich, wo die Barriereschicht 15 unmittelbaren Kontakt mit dem Reservoir 2 hat. Sickert das Wasser erst in einem Randbereich durch die Barriereschicht 15, so entspricht der Weg, den das Wasser entlang der Barriereschicht 15 zurückgelegt hat, in etwa dem maximal möglichen. Hier ist eine möglichst großflächige Behandlung des Materials 3 besonders gut möglich.

Es ist ferner möglich, über die Anzahl, Größe und/oder Geometrie der Durchlässe 16 die Fließgeschwindigkeit des Wassers durch das System 1, 1' beliebig zu variieren und somit die Behandlung des Materials 3 den Umständen entsprechend anzupassen. Die Durchlässe 16 können in Form von Schlitzen oder Löchern vorliegen, es ist jedoch auch jede andere Ausgestaltungsform denkbar.

Sind wenigstens zwei Barriereschichten 15 vorgesehen, so ist es besonders vorteilhaft, wenn die Durchlässe 16 von jeweils zwei benachbarten Barriereschichten 15 gegeneinander versetzt, besonders bevorzugt entgegengesetzt zueinander angeordnet sind. Durch das versetzte Anordnen der Durchlässe 16 für Wasser wird der Sickerweg des Wassers durch das System 1, 1' verlängert, sodass die Verweildauer des Wassers für eine ausreichende Behandlung innerhalb des Systems 1, 1' gesteigert ist und zudem das Volumen des Materials 3 möglichst großflächig mit Wasser durchdrungen werden kann. In Figur 2 ist mit den Pfeilen der Sickerweg des Wassers durch die Durchlässe 16 der Barriereschichten 15 gezeigt.

In einer besonders bevorzugten Ausführungsform umfasst das Reservoir 2 und/oder die Barriereschicht 15 ein Geotextil. Das Geotextil wiederum umfasst in seiner einfachsten Ausführungsform eine Lage aus einem Gewebe oder Vlies, die besonders vorzugsweise mit Polyurethan durchsetzt ist.

Die Verwendung eines Geotextils hat den Vorteil, dass unerwünschtes Austreten von Wasser sowie Verunreinigungen in dem Reservoir 2 in die Umgebung, beispielsweise in das Grundwasser, besonders effektiv vermieden werden kann. Somit wird auf sichere Weise verhindert, dass belastende Chemikalien oder dergleichen, welche mit dem aufbereiteten Wasser zur Behandlung in das Reservoir 2 transportiert oder aus dem Material 3 abtransportiert werden, in das Grundwasser gelangen können. Dies ist besonders von Vorteil, wenn es sich bei einem System 1, 1' um eine im Außenbereich eingesetzte Anlage handelt oder das System 1, 1' in einer Mine oder einem Bergwerk vorgesehen ist.

Ein weiterer Vorteil des Geotextil ist, dass es thermische Änderungen und mechanisch bedingte Verschiebungen im Gefüge des Bodens (z.B. bei einem Erdbeben) in der Regel standhält und es somit zu keiner Zerstörung des wasserundurchlässigen Reservoirs 2 kommt. Durch seine Stabilität und Witterungsbeständigkeit ist es auch nach längerer Gebrauchszeit gegenüber Beschädigungen durch Wurzeln oder spitze Steine resistent.

Es ist außerdem von Vorteil, dass sich die äußere Form des Geotextils an das Gelände vor Ort anpassen lässt, insbesondere dann, wenn das System 1, 1' im Außenbereich eingesetzt wird. Ein Reservoir, welches ein Geotextil umfasst, kann folglich äußert flexibel eingesetzt werden. Dies spart wiederum Zeit und zusätzliche Kosten für Bauarbeiten.

Das für das Geotextil verwendete Vlies kann beispielsweise zusätzlich Drähte oder auch flächige Gebilde aus Elastomeren/ Polymeren, vorwiegend aus natürlichen Rohstoffen, aufweisen. Ferner können Spinnfasern mit einer Länge von mehreren Zentimetern beispielsweise aus Kunststoff vorgesehen sein. Die Spinnfasern und gegebenenfalls Drähte und/oder Blättchen können so aneinandergefügt werden, dass die Festigkeit des Vlieses bzw. Geotextils richtungsunabhängig ist. Dadurch wird eine im Boden flexible Flächenausbildung mit guter Anpassung an den' gegebenen Untergrund ohne Gefahr von Beschädigungen des Gefüges erreicht.

Umfasst das Geotextil ein Gewebe, so dient dieses Gewebe aus kreuzenden Fäden und Fasersystemen (Fasergewebe) vorzugsweise ausschließlich als Bewährung sowie zur Aufnahme des Polyurethans. Bezüglich der Herstellung und Anbringung eines Geotextils in einem Reservoir 2 bzw. als Barriereschicht 15 wird auf die EP 2 058 441 verwiesen.

Das Reservoir ist nicht auf ein Geotextil beschränkt, um es wasserundurchlässig und nach außen abgegrenzt auszubilden. Vielmehr sind auch andere Materialien oder auch die natürlichen Begebenheiten in der Umgebung des Systems 1, 1' (beispielsweise Auqifugen in einer geologischen Schicht) für den gewünschten Effekt denkbar. Außerdem kann das Reservoir auch durch eine künstliche Auffangwanne aus einem für die einzusetzenden Materialien und Stoffe resistenten Material hergestellt sein.

In einer besonders bevorzugten Ausführungsform ist das System 1, 1' ferner mit natürlichen und/oder künstlich angelegten Flächen oder Grünflächen funktional verbunden. Es ist somit möglich, beispielsweise eine Hotel- oder Industrieanlage oder jedweden anderen wasserverbrauchenden Komplex ein eigenes, autonomes Wasserwirtschafts- und Wasserreinigungssystem unter funktionaler Einbeziehung der externen natürlichen oder künstlichen Flächen, beispielsweise eines Golfplatzes oder einer Parkanlage des Hotels, als notwendige "Kläranlage" bereitzustellen.

Besonders vorzugsweise sind die zum System 1, 1' gehörenden Flächen oder Gebiete wassertechnisch von ihrem natürlichen Umfeld hermetisch separiert. Auf diese Weise ist es möglich, das System 1, 1' bzw. die Anlage separat zu bewirtschaften.

Im Rahmen der Erfindung ist es zur Behandlung radioaktiv verunreinigter Materialien 3 Besonders vorteilhaft, wenn das Reservoir 2 in Tongesteinen vorgesehen ist, wie sie bspw. in der Opalinuston-Formation im Jura vorliegen. Dies ist insbesondere bei urankontaminierten Materialien 3 aus Minen (bspw. der Mine, in dem das Reservoir 2 vorgesehen ist) oder anderen radioaktiv verunreinigten Materialien 3 von besonderem Vorteil. Die in dem Ton enthaltenen Tonminerale (bspw. Kaolinit) dienen dabei der Bindung der radioaktiven Stoffe, die somit aus dem zur Behandlung der Materialien 3 verwendeten Wasser gereinigt werden können, welches bspw. zuvor die radioaktiven Stoffe aus dem Material 3 gewaschen hat. Im Zusammenspiel mit den im Tongestein enthaltenen Eisenmineralien, die eine Reduktion der radioaktiven Stoffe und somit das Festsetzen derselben im Tongestein bewirken, kann die Reinigung von Materialien 3 in dem Reservoir 2 noch gesteigert werden.

Es ist zusätzlich oder alternativ möglich, dass die Wände des Reservoirs 2 mit natürlichem Ton (insbesondere enthaltend Tonminerale) zu Reinigungszwecken des Materials 3 bzw. des zur Behandlung der Materialien 3 verwendeten Wassers versehen werden. Dazu kann eine Tonschicht auf die Innenwände des Reservoirs 2 aufgebracht werden, insbesondere wenn das Reservoir 2 (bspw. eine Mine) nicht in Tongestein vorgesehen ist. Die Tonschicht kann, hat diese ausreichend radioaktive Stoffe gebunden bzw. ist diese mit radioaktiven Stoffen gesättigt, abgetragen und umweltgerecht entsorgt bzw. gelagert oder aufbereitet werden. Ist das Reservoir 2 in Tongestein vorgesehen, so kann bspw. die äußerste Tonschicht der Innenwände des Reservoirs 2 in regelmäßigen Abständen abgetragen und entsprechend entsorgt oder aufbereitet werden, um die stark kontaminierten Tonschichten zu entfernen und die Reinigung mit einer "frischen" Tonschicht, die ggf. neu aufgetragen werden kann, fortzuführen.

Ferner ist es denkbar, dass mittels des Einsatzes von Ton absorbierende Trennwände, Trennschichten oder Reinigungsschichten (aus Ton oder Tongestein) im System vorgesehen werden. Hierzu werden die aus Ton(gestein) gebildeten Trennwände, Trennschichten oder Reinigungsschichten vorzugsweise an Stellen in dem System oder auch separat, also bspw. außerhalb des Reservoirs 2, dort vorgesehen, wo (kontaminierte) Materialien 3 und/oder Wasser anliegen bzw. hindurchfließen.

Auf die Ausführungsbeispiele bezogen bedeutet das, dass bspw. in dem Auffangbehälter 4, 4', in der Aufbereitungsvorrichtung 9, 9' oder in den Leitungen 10, 11, 13 oder an sonstigen geeigneten Stellen des Systems 1, 1' Trennwände, Trennschichten oder Reinigungsschichten aus Ton vorgesehen sein können. Beispielsweise kann auch die Barriereschicht 15 oder die Aufbereitungsvorrichtung 9, 9' an sich aus einem entsprechenden Ton gebildet sein. Ebenso ist es denkbar, zusätzliche Barriereschichten aus Ton als Trennwände und Reinigungsvorrichtung, insbesondere für mit radioaktiven Stoffen verunreinigtes Wasser, vorzusehen. Beispielsweise können die Öffnungen 5 oder der Durchlass 16 mit Ton ausgefüllt sein, so dass das Wasser beim Durchtritt durch die Öffnung 5 bzw. den Durchlass 16 durch den Ton hindurchfließen muss, also gefiltert und somit von radioaktiven Stoffen gereinigt wird.

Es ist überdies denkbar, Ton als Filterelement, bspw. als lose Tonpartikel, in dem System vorzusehen, so dass dieser mit dem Material 3 oder dem das Material 3 behandelnden kontaminierten Wasser in Verbindung kommt und die in dem Material 3 enthaltenen bzw. aus dem Material 3 gewaschenen und in dem Wasser abgeführten radioaktiven Stoffe binden kann. Mit anderen Worten muss der Ton nicht als Schicht oder Wand vorliegen, sondern kann in jeglicher Form vorgesehen werden, bspw. "fest" (als Tonplatten oder Tonklumpen), fest angeordnet" (als Trennschicht oder Trennwand), "lose geordnet" (als Filterpartikel in einem (begrenzten) Filtergehäuse) oder "lose willkürlich" (bspw. aufgeschlämmt in dem kontaminierten Material 3 oder Wasser). Vorzugsweise ist der Ton bzw. das Tongestein so vorgesehen, dass es wahlweise ausgewechselt oder abgetragen werden kann, wenn eine vorbestimmte Menge an kontaminierten (radioaktiven) Stoffen darin gebunden ist. Auf diese Weise wird eine effektive Reinigungsvorrichtung für insbesondere radioaktiv kontaminierte Materialien 3 bereitgestellt.

Im Folgenden wird ein Verfahren zur geschlossenen Wasserkreislaufführung gemäß der Erfindung beschrieben.

Gemäß der Erfindung weist das Verfahren zur geschlossenen Wasserkreislaufführung folgende Schritte auf:
In einem ersten Schritt wird ein in dem wasserundurchlässigen und nach außen abgegrenzten Reservoir 2 vorgesehenes oder angeordnetes Material 3 mittels Wasser behandelt. Das Behandeln kann beispielsweise das Auswaschen von Verunreinigungen aus dem Material 3 umfassen. In einem zweiten Schritt wird das Wassers in einem im Wesentlichen in der oder in Nähe der Sohle des Reservoirs 2 angeordneten Auffangbehälter 4, 4' aufgefangen, wobei der Auffangbehälter 4, 4' wenigstens eine Öffnung 5 aufweist, durch die das Wasser in den Auffangbehälter 4, 4' fließt. In einem dritten Schritt wird das in dem Auffangbehälter 4, 4' gesammelte Wasser aus dem Reservoir 2 mittels einer Wasserentnahmevorrichtung 7 entnommen. Hierzu kann die Wasserentnahmevorrichtung 7 eine Pumpvorrichtung aufweisen, mittels der das Wasser aus dem Auffangbehälter zur Aufbereitungsvorrichtung 9, 9' und vorzugsweise weiter über die Rückführvorrichtung R bzw. Rückführleitung 13 bis zurück ins Reservoir 2 geleitet wird. In einem vierten Schritt wird das aus dem Reservoir 2 entnommene Wasser in einer Aufbereitungsvorrichtung 9, 9' aufbereitet. Die Aufbereitung umfasst vorzugsweise das Versetzen des Wassers mit einem für die Behandlung benötigten Stoff oder Material, oder die Reinigung des Wassers durch Absondern eines das Wasser in dem Reservoir 2 verunreinigenden Stoffes oder Materials. In einem letzten Schritt wird das aufbereitete Wasser in das Reservoir 2 über eine Rückführvorrichtung R zurückgeführt.

Die Erfindung ist nicht auf die zuvor beschriebenen Ausführungsbeispiele beschränkt. Vielmehr können die darin beschriebenen Beispiele kombiniert werden.

So ist die Erfindung beispielsweise nicht auf eine bestimmte Anzahl an Reservoirs je System beschränkt. Ferner kann die Rückführung des Wassers beliebig gestaltet sein. Ferner ist die Anordnung der Pumpvorrichtung nicht beschränkend; vielmehr ist die Pumpvorrichtung derart angeordnet, dass sie ein Durchleiten des Wassers wenigstens von dem Auffangbehälter über die Aufbereitungsvorrichtung und ggf. zurück in das Reservoir ermöglicht, wobei ein dafür ggf. notwendiges Leitungssystem beliebig ausgestaltet sein kann. Auch das in dem Reservoir 2 vorgesehene und zu behandelnde Material ist erfindungsgemäß nicht beschränkt.

Es ist überdies denkbar, dass mehrere der erfindungsgemäßen Systeme zu einem Komplex zusammengeschaltet werden, der einen geschlossenen Wasserkreislauf hat. Dabei kann eine Stufenweise Behandlung von Wasser oder Material 3 oder parallel verschiedene Abläufe durchgeführt werden.

Ferner ist es denkbar, dass aus den in einem System gewonnenen Verunreinigungen Stoffe extrahiert werden können bzw. die Verunreinigungen Stoffe darstellen, die diesem oder einem nachgeschalteten erfindungsgemäßen System zugeführt werden können, insbesondere dem Wasser zur Behandlung eines weiteren oder desselben Materials 3.

## Patentansprüche

1. System zur geschlossenen Wasserkreislaufführung, aufweisend:
ein wasserundurchlässiges und nach außen abgegrenztes Reservoir (2) zum Auffangen von Wasser,
wobei in dem Reservoir (2) ein Material (3) vorgesehen und/oder angeordnet ist, welches mit dem Wasser zu behandeln ist,
einen Auffangbehälter (4, 4'), welcher im Reservoir (2) im Wesentlichen in der oder in Nähe der Sohle des Reservoirs (2) angeordnet ist, wobei der Auffangbehälter (4, 4') wenigstens eine Öffnung (5) aufweist, durch die das Wasser fließen kann,
eine Wasserentnahmevorrichtung (7) zur Entnahme des in dem Auffangbehälter (4, 4') gesammelten Wassers aus dem Reservoir (2),
eine Aufbereitungsvorrichtung (9, 9'), die ausgebildet ist, das dem Reservoir (2) entnommene Wasser zur Wiederverwendung in dem System (1, 1') aufzubereiten, und
eine Rückführvorrichtung (R), die ausgebildet ist, das aufbereitete Wasser in das Reservoir (2) zurückzuführen.

2. System nach Anspruch 1, wobei das Material (3) ein das Reservoir (2) wenigstens teilweise auffüllendes Schüttgut oder ein die Innenwand des Reservoirs (2) wenigstens teilweise bedeckendes Material ist.

3. System nach einem der vorhergehenden Ansprüche, wobei sich der Auffangbehälter (4, 4') in dem Reservoir (2) von dessen Boden nach oben mindestens bis oberhalb des zu behandelnden Materials (3) in dem Reservoir (2) erstreckt, wobei der Auffangbehälter (4, 4') oberhalb des Materials (3) eine zweite Öffnung (6) aufweist, durch die das Wasser entnehmbar ist.

4. System nach einem der vorhergehenden Ansprüche, wobei das Reservoir (2) wenigstens ein Auffangbecken oder künstliche oder natürliche Höhlen, wie bspw. Minen und Bergwerke, aufweist.

5. System nach einem der vorhergehenden Ansprüche, wobei das Reservoir (2) ein Geotextil umfasst.

6. System nach einem der vorhergehenden Ansprüche, wobei das Wasser mit Stoffen oder Materialien versetzt ist, welche der Behandlung des Materials (3) in dem Reservoir (2) dienen und die dem Wasser in der Aufbereitungsvorrichtung (9, 9') zuführbar sind.

7. System nach einem der vorhergehenden Ansprüche, wobei die Aufbereitungsvorrichtung (9, 9') eine Reinigungsvorrichtung aufweist, die derart ausgebildet ist, das in dem Reservoir (2) verunreinigte Wasser zu reinigen, wobei vorzugsweise die Verunreinigungen über wenigstens eine Abführleitung (11) aus dem System (1, 1') zur Wiederverwertung entnehmbar sind.

8. System nach einem der vorhergehenden Ansprüche, ferner aufweisend wenigstens eine Zuführleitung (12) zum Zuführen von Wasser und/oder dem Wasser zuzusetzenden Stoffen.

9. System nach einem der vorhergehenden Ansprüche, wobei die Aufbereitungsvorrichtung (9, 9') fließtechnisch dem Auffangbehälter (4, 4') nachgeschaltet ist, vorzugsweise außerhalb des Reservoirs (2) angeordnet ist.

10. System nach einem der vorhergehenden Ansprüche, wobei Ton als Filterelement, insbesondere als lose Tonpartikel, in dem System vorgesehen sind, derart, dass die Tonpartikel mit dem Material oder dem das Material behandelnden kontaminierten Wasser in Verbindung kommt, um in dem Material enthaltene bzw. aus dem Material gewaschene und in dem Wasser abgeführte Stoffe zu binden.

11. System nach einem der vorhergehenden Ansprüche, wobei das Reservoir (2) in Tongestein vorgesehen ist, und/oder wobei die Wände des Reservoirs (2) mit natürlichem Ton zu Reinigungszwecken des Materials (3) beziehungsweise des zur Behandlung des Materials (3) verwendeten Wassers versehen sind, und
wobei das Tongestein oder der Ton derart vorgesehen sind, dass es/er wahlweise abgetragen oder ausgewechselt werden kann.

12. System nach einem der vorhergehenden Ansprüche, wobei der geschlossene Wasserkreislauf derart ausgebildet ist, dass das mittels der Wasserentnahmevorrichtung (7) aus dem Auffangbehälter (4, 4') zur Aufbereitungsvorrichtung (9', 9') geleitete Wasser weiter über die Rückführvorrichtung (R) bis zurück in das Reservoir (2) geleitet wird,
wobei die Rückführvorrichtung (R) vorzugsweise eine Rückführleitung (13) aufweist, wobei die Rückführleitung (13) an ihrem der Aufbereitungsvorrichtung (9, 9') abgewandten Ende vorzugsweise eine Düse und/oder ein Ventil (14) aufweist.

13. Verfahren zur geschlossenen Wasserkreislaufführung, aufweisend die folgenden Schritte:
• Behandeln eines in einem wasserundurchlässigen und nach außen abgegrenzten Reservoir (2) vorgesehenen oder angeordneten Material (3) mittels Wasser,
• Auffangen des Wassers in einem im Reservoir (2) im Wesentlichen in der oder in Nähe der Sohle des Reservoirs (2) angeordneten Auffangbehälter (4, 4'), wobei der Auffangbehälter (4, 4 `) wenigstens eine Öffnung (5) aufweist, durch die das Wasser in den Auffangbehälter (4, 4') fließt,
• Entnehmen des in dem Auffangbehälter (4, 4') gesammelten Wassers aus dem Reservoir (2) mittels einer Wasserentnahmevorrichtung (7),
• Aufbereiten des aus dem Reservoir (2) entnommenen Wassers in einer Aufbereitungsvorrichtung (9, 9'), und
• Zurückführen des aufbereiteten Wassers in das Reservoir (2) über eine Rückführvorrichtung (R).

14. Verfahren nach Anspruch 13, wobei die Behandlung des Materials (3) das Auswaschen von Verunreinigungen aus dem Material umfasst.

15. Verfahren nach Anspruch 13 oder 14, wobei die Wasserentnahmevorrichtung (7) eine Pumpvorrichtung (8, 8') aufweist, mittels der das Wasser aus dem Auffangbehälter (4, 4') zur Aufbereitungsvorrichtung (9, 9') und vorzugsweise weiter über die Rückführvorrichtung (R) bis zurück ins Reservoir (2) geleitet wird.

16. Verfahren nach einem der Ansprüche 13 bis 15, wobei die Aufbereitung das Versetzen des Wassers mit einem für die Behandlung benötigten Stoff oder Material, oder die Reinigung des Wassers durch Absondern eines das Wasser in dem Reservoir (2) verunreinigenden Stoffes oder Materials umfasst.

17. Verfahren nach einem der Ansprüche 13 bis 16, wobei die Größe der Öffnung (5) wahlweise variiert werden kann, vorzugsweise stufenlos zwischen einem vollständig geschlossenen und einem vollständig geöffneten Zustand.

18. Verfahren nach einem der Ansprüche 13 bis 17, wobei die Aufbereitungsvorrichtung (9, 9') Reinigungsschichten aus Ton aufweist oder aus einem Ton gebildet ist, und/oder wobei die wenigstens eine Öffnung (5) mit Ton ausgefüllt ist, sodass Wasser beim Durchtritt durch die Aufbereitungsvorrichtung (9, 9') oder die Öffnung (5) durch den Ton hindurchfließt und mit dem Ton in Kontakt kommt.

## Claims

1. System for conveying water in a closed circuit, comprising:
- a water-impermeable and outwardly delimited reservoir (2) for collecting water, a material (3) that is to be treated with the water being provided and/or arranged in the reservoir (2),
- a collecting tank (4, 4') which is arranged in the reservoir (2) substantially in or close to the base of the reservoir (2), the collecting tank (4, 4') having at least one opening (5) through which the water can flow,
- a water draining apparatus (7) for draining the water that has been collected in the collecting tank (4, 4') from the reservoir (2),
- a treatment apparatus (9, 9') which is embodied to treat the water drained from the reservoir (2) for re-use in the system (1, 1'), and
- a recycling apparatus (R) which is configured to recycle the treated water into the reservoir (2).

2. System according to claim 1, wherein the material (3) is a bulk material that at least partially fills the reservoir (2) or a material that at least partially covers the inner wall of the reservoir (2).

3. System according to any one of the preceding claims, wherein the collecting tank (4, 4') in the reservoir (2) extends upwards from the base thereof to at least above the material (3) that is to be treated in the reservoir (2), the collecting tank (4, 4') comprising a second opening (6) above the material (3), through which the water can be drained off.

4. System according to any one of the preceding claims, wherein the reservoir (2) comprises at least one collecting basin or artificial or natural caves such as mines and pits, for example.

5. System according to any one of the preceding claims, wherein the reservoir (2) comprises a geotextile.

6. System according to any one of the preceding claims, wherein the water is combined with substances or materials that serve to treat the material (3) in the reservoir (2) and which can be fed into the water in the treatment apparatus (9, 9').

7. System according to any one of the preceding claims, wherein the treatment apparatus (9, 9') comprises a purification apparatus that is configured so as to purify the water that has been contaminated in the reservoir (2), while preferably the contaminants can be removed from the system (1, 1') through at least one discharge pipe (11) for reutilisation.

8. System according to any one of the preceding claims, further comprising at least one supply pipe (12) for supplying water and/or substances that are to be added to the water.

9. System according to any one of the preceding claims, wherein the treatment apparatus (9, 9') is connected fluidically downstream of the collecting tank (4, 4'), and is preferably arranged outside the reservoir (2).

10. System according to any one of the preceding claims, wherein clay is provided in the system as a filter element, particularly in the form of loose clay particles, such that the clay particles come into contact with the material or the contaminated water being used to treat the material, so as to bind substances contained in the material or washed out of the material and discharged in the water.

11. System according to any one of the preceding claims, wherein the reservoir (2) is provided in argillaceous rock and/or the walls of the reservoir (2) are provided with natural clay for the purpose of purifying the material (3) or the water used to treat the material, and wherein the argillaceous rock or the clay are provided such that they can be selectively removed or exchanged.

12. System according to any one of the preceding claims, wherein the closed circuit for water is configured so that the water conveyed out of the collecting tank (4, 4') to the treatment apparatus (9, 9') by means of the water draining apparatus (7) is conveyed on through the recycling apparatus (R) back into the reservoir (2),
the recycling apparatus (R) preferably comprising a recycling pipe (13), the recycling pipe (13) preferably having a nozzle and/or a valve (14) at its end remote from the treatment apparatus (9, 9').

13. Method for conveying water in a closed circuit, comprising the following steps:
• treating a material (3) that is provided or arranged in a water-impermeable and outwardly delimited reservoir (2) using water,
• collecting the water in a collecting tank (4, 4') arranged in the reservoir (2) substantially in or close to the base of the reservoir (2), the collecting tank (4, 4') comprising at least one opening (5) through which the water flows into the collecting tank (4, 4'),
• draining the water that has been collected in the collecting tank (4, 4') from the reservoir (2) by means of a water draining apparatus (7),
• treating the water drained off from the reservoir (2) in a treatment apparatus (9, 9'), and
• recycling the treated water into the reservoir (2) through a recycling apparatus (R).

14. Method according to claim 13, wherein the treatment of the water (3) comprises washing contaminants out of the material.

15. Method according to claim 13 or 14, wherein the water draining apparatus (7) comprises a pumping apparatus (8, 8') by means of which the water is conveyed out of the collecting tank (4, 4') to the treatment apparatus (9, 9') and preferably on through the recycling apparatus (R) back into the reservoir (2).

16. Method according to any one of claims 13 to 15, wherein the treatment comprises combining the water with a substance or material that is required for the treatment, or purifying the water by separating off a substance or material that is contaminating the water in the reservoir (2).

17. Method according to any one of claims 13 to 16, wherein the size of the opening (5) can be varied as desired, preferably smoothly between a fully closed and a fully opened state.

18. Method according to any one of claims 13 to 17, wherein the treatment apparatus (9, 9') comprises purification layers of clay or is formed from a clay, and/or wherein the at least one opening (5) is filled with clay, so that as the water passes through the treatment apparatus (9, 9') or the opening (5) it flows through the clay and comes into contact with the clay.

## Revendications

1. Système de circulation d'eau en circuit fermé, comprenant :
un réservoir (2) étanche à l'eau qui est délimité à l'extérieur et qui est destiné à collecter de l'eau, dans le réservoir (2) étant prévue et/ou disposée une matière (3) qui doit être traitée avec l'eau,
un récipient de collecte (4, 4') qui est disposé dans le réservoir (2) sensiblement dans le fond du réservoir (2) ou à proximité de celui-ci, le récipient de collecte (4, 4') présentant au moins une ouverture (5) par laquelle l'eau peut s'écouler,
un dispositif de prélèvement d'eau (7) pour prélever du réservoir (2) l'eau collectée dans le récipient de collecte (4, 4'),
un dispositif de traitement (9, 9') qui est configuré pour traiter l'eau prélevée dudit réservoir (2) en vue de la réutiliser dans le système (1, 1'), et
un dispositif de retour (R) qui est configuré pour ramener l'eau traitée dans le réservoir (2).

2. . Système selon la revendication 1, dans lequel le matériau (3) est un produit en vrac remplissant au moins partiellement le réservoir (2) ou une matière recouvrant au moins partiellement la paroi intérieure du réservoir (2).

3. . Système selon l'une des revendications précédentes, dans lequel le récipient de collecte (4, 4') s'étend dans le réservoir (2) depuis le fond de celui-ci vers le haut au moins jusqu'au-dessus de la matière (3) à traiter dans le réservoir (2), ledit récipient de collecte (4, 4') présentant au-dessus de la matière (3) une seconde ouverture (6) par laquelle l'eau est prélevée.

4. . Système selon l'une des revendications précédentes, dans lequel le réservoir (2) comporte au moins un bassin de collecte ou des cavités artificielles ou naturelles, telles que par exemple des mines et exploitations minières.

5. . Système selon l'une des revendications précédentes, dans lequel le réservoir (2) comprend un géotextile.

6. . Système selon l'une des revendications précédentes, dans lequel l'eau est mélangée à des substances ou des matières qui sont utilisées pour traiter la matière (3) dans le réservoir (2) et qui peuvent être amenées à l'eau dans le dispositif de traitement (9, 9').

7. . Système selon l'une des revendications précédentes, dans lequel le dispositif de traitement (9, 9') comporte un dispositif de nettoyage qui est configuré de façon à nettoyer l'eau contaminée dans le réservoir (2), de préférence les impuretés pouvant être éliminées du système (1, 1') en vue du recyclage par au moins un conduit d'évacuation (11).

8. . Système selon l'une des revendications précédentes, comprenant en outre au moins un conduit d'amenée (12) destinée à amener de l'eau et/ou des matières à ajouter à l'eau.

9. . Système selon l'une des revendications précédentes, dans lequel le dispositif de traitement (9, 9') est relié, du point de vue de la technique des fluides, en aval du récipient de collecte (4, 4'), de préférence disposé à l'extérieur du réservoir (2).

10. . Système selon l'une des revendications précédentes, dans lequel de l'argile est prévu dans le système comme élément de filtrage, en particulier des particules d'argile libres, de telle sorte que les particules d'argile viennent en contact avec la matière ou l'eau contaminée traitant la matière afin de lier les substances contenues dans la matière ou lavée de la matière et évacuée dans l'eau.

11. . Système selon l'une des revendications précédentes, dans lequel le réservoir (2) est prévu dans la roche argileuse, et/ou dans lequel les parois du réservoir (2) sont dotées d'argile naturelle pour le nettoyage de la matière (3) ou de l'eau utilisée pour traiter la matière (3), et dans lequel la roche argileuse ou l'argile est prévue pour pouvoir être au choix enlevée ou remplacée.

12. . Système selon l'une des revendications précédentes, dans lequel la circulation d'eau en circuit fermé est configurée de telle sorte que l'eau, amenée du récipient de collecte (4, 4') au dispositif de traitement (9, 9') au moyen du dispositif de prélèvement d'eau (7), est ramenée jusque dans le réservoir (2) via le dispositif de retour (R),
le dispositif de retour (R) étant de préférence un conduit de retour (13), le conduit de retour (13) comportant de préférence un ajutage et/ou une vanne (14) à son extrémité opposée au dispositif de traitement (9, 9').

13. . Procédé pour la circulation d'eau en circuit fermé, comprenant les étapes suivantes consistant à :
• traiter avec de l'eau une matière (3) prévue ou disposée dans un réservoir (2) étanche à l'eau et délimitée à l'extérieur,
• collecter l'eau dans un récipient de collecte (4, 4') disposé dans le réservoir (2) sensiblement dans le fond du réservoir (2) ou à proximité de celui-ci, le récipient de collecte (4, 4') présentant au moins une ouverture (5) par laquelle l'eau s'écoule dans le récipient de collecte (4, 4'),
• prélever du réservoir (2) au moyen d'un dispositif de prélèvement d'eau (7) l'eau collectée dans le récipient de collecte (4, 4'),
• traiter l'eau prélevée du réservoir (2) dans un dispositif de traitement (9, 9'), et
• ramener l'eau traitée dans le réservoir (2) via un dispositif de retour (R).

14. . Procédé selon la revendication 13, dans lequel le traitement de la matière (3) comprend l'élimination des impuretés de la matière par lavage.

15. . Procédé selon la revendication 13 ou 14, dans lequel le dispositif de prélèvement d'eau (7) comporte un dispositif de pompage (8, 8') au moyen duquel l'eau est amenée du récipient de collecte (4, 4') au dispositif de traitement (9, 9'), et est de préférence ramenée au réservoir (2) via le dispositif de retour (R).

16. . Procédé selon l'une des revendications 13 à 15, dans lequel le traitement comprend les opérations consistant à doter l'eau d'une substance ou d'une matière nécessaire au traitement ou à nettoyer l'eau par séparation d'une substance ou matière contaminant l'eau dans le réservoir (2).

17. . Procédé selon l'une des revendications 13 à 16, dans lequel la dimension de l'ouverture (5) peut être modifiée sélectivement, de préférence de façon progressive entre un état complètement fermé et un état complètement ouvert.

18. . Procédé selon l'une des revendications 13 à 17, dans lequel le dispositif de traitement (9, 9') comporte des couches de nettoyage en argile ou est constitué d'une argile, et/ou dans lequel au moins une ouverture (5) est remplie d'argile de sorte que l'eau qui passe à travers le dispositif de traitement (9, 9') ou l'ouverture (5) s'écoule à travers l'argile et vient en contact avec l'argile.
